# EUROPÄISCHE PATENTANMELDUNG

(11) **EP 1 022 907 A2**
(43) Veröffentlichungstag der Anmeldung: **26.07.2000**
(21) Anmeldenummer: 00100623.8
(22) Anmeldetag: 13.01.2000
(51) Int. Cl.: H04N 7/20

(54) **Satellitenfernsehsignal-Empfängeranlage**

(30) Priorität: 22.01.1999 DE 19902545
(71) Anmelder: GRUNDIG Aktiengesellschaft, 90762 Fürth (DE)
(72) Erfinder: KLEIN, Walter, 90762 FUERTH (DE)

(57) **Zusammenfassung**

Die Erfindung betrifft eine Satellitenfernsehsignal-Empfangsanlage, die eine Kopfstation aufweist. Die Kopfstation enthält mehrere Aufbereitungszüge zur Demodulation und Remodulation von von einer Satellitenantenne abgeleiteten Satellitenfernsehsignalen. Weiterhin weist die Kopfstation einen zweiten Eingangsanschluß auf, welchem von einer terrestrischen Empfangsantenne abgeleitete Fernsehsignale zugeführt werden. Diese werden innerhalb der Kopfstation in einem terrestrischen Empfänger verarbeitet. Die Kopfstation enthält einen gemeinsamen Ausgang für terrestrisch empfangene und via Satellit empfangene Fernsehsignale, der an ein bestehendes Hausantennenverteilnetz angeschlossen werden kann.

## Beschreibung

Die Erfindung betrifft eine Satellitenfernsehsignal-Empfangsanlage.

Aus dem vom Hüthig Buch Verlag Heidelberg aufgelegten Buch 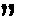 12-GHz-Satellitenempfang" von Bernhard Liesenkötter, 5. Auflage, 1994, sind bereits Satellitenfernsehsignal-Empfangsanlagen bekannt. Im Abschnitt 4.5.2 dieses Buches auf den Seiten 104-106 ist eine Gemeinschaftsempfangsanlage beschrieben, die mit einer zentralen Modulationswandlung arbeitet. Dabei werden zentral in der Empfangsstelle, die beispielsweise auf dem Dachboden eines Wohnblockes oder eines Mehrfamilienhauses vorgesehen sein kann, die von der Außeneinheit der Satellitenempfangsanlage abgeleiteten Fernsehsignale zunächst demoduliert und dann im Sinne einer Remodulation in Norm-TV-Kanäle umgesetzt, d. h. in VHF- oder UHF-Signale. Diese werden dann in das bestehende Hausantennenverteilnetz eingespeist und zusammen mit terrestrischen Fernsehprogrammen den im Wohnblock oder Mehrfamilienhaus vorhandenen Fernsehempfangsgeräten zugeführt und auf deren Bildschirm wiedergegeben.

Die genannte zentrale Aufbereitung der Satellitenfernsehsignale erfolgt in einer Kopfstation, welche für jedes empfangene Satellitenprogramm einen Aufbereitungszug aufweist. Die Aufbereitungszüge umfassen jeweils Einrichtungen zur Demodulation und Remodulation der Signale. Bei den genannten Aufbereitungszügen handelt es sich jeweils um Module, die bei einer Umrüstung der Anlage oder bei einem Defekt einzeln aus der Kopfstation entnommen und repariert oder durch ein neues Modul ersetzt werden können. Kleinere Kopfstationen enthalten beispielsweise 8 derartige Module bzw. Kanalaufbereitungseinheiten.

Gemäß der Erfindung umfaßt die Kopfstation außer einer Mehrzahl von Aufbereitungszügen auch eine Empfangseinheit zum Empfang von terrestrischen Rundfunksignalen. Dadurch wird eine Voraussetzung dafür geschaffen, daß die gesamte Satellitenfernsehsignal-Empfangsanlage sowohl preisgünstig realisiert als auch schnell und einfach umgerüstet und gegebenenfalls auch erweitert werden kann, beispielsweise im Hinblick auf einen zusätzlichen Empfang von digitalen Satellitenrundfunksignalen.

Ein weiterer Vorteil der Erfindung besteht darin, daß die beanspruchte Satellitenfernsehsignal-Empfangsanlage keine außerhalb der Kopfstation vorgesehene Vorrichtung zur Überlagerung von von der terrestrischen Empfangsantenne mit von der Kopfstation abgeleiteten VHF- bzw. UHF-Signalen benötigt, wie sie bei bisher bekannten Empfangsanlagen notwendig ist.

Die in den Ansprüchen 2 bis 8 angegebenen Anlagen sind in besonderem Maße preisgünstig realisierbar und auch flexibel an neue Empfangssituationen anpaßbar. Dabei ermöglicht insbesondere der im Anspruch 4 angegebene feste Einbau einer Baugruppe eine preisgünstige Realisierung und die in den Anprüchen 7 und 8 angegebenen steckbaren Ausführungen einer Baugruppe Flexibilität im Hinblick auf eine Anpassung der Anlage an ein zukünftiges digitales Empfangsszenario.

Die Verwendung eines gemeinsamen Mikrocomputers als Steuereinheit, wie sie in den Ansprüchen 9-13 angegeben ist, erlaubt eine zentrale Überwachung der gesamten Empfangsverhältnisse. Dadurch kann beispielsweise sichergestellt werden, daß von verschiedenen Empfangsquellen oder -kanälen abgeleitete UHF- oder VHF-Ausgangssignale nicht in ein und demselben UHF- bzw. VHF-Kanal zum Liegen kommen. In vorteilhafter Weise kann der Mikrocomputer durch eine entsprechende Programmierung auch in die Lage versetzt werden, den empfangenen Signalen automatisch einen noch freien UHF- oder VHF-Kanal zuzuordnen. In diesem Fall ist der Benutzer von der Aufgabe befreit, selbst die Anzahl der zur Verfügung stehenden Kanäle und die Umsetzung der Signale in freie Kanäle zu überwachen.

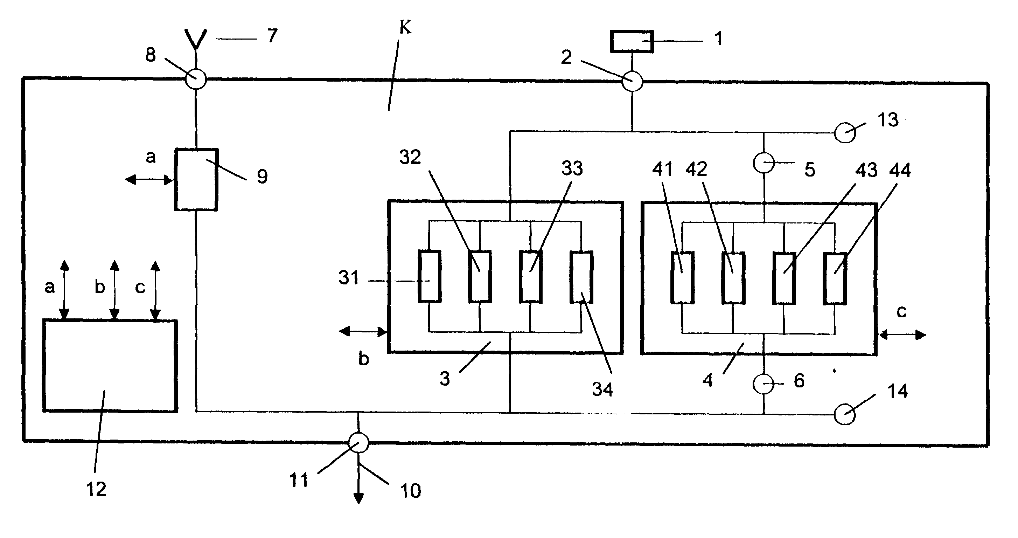

Weitere vorteilhafte Eigenschaften der Erfindung ergeben sich aus der Erläuterung eines Ausführungsbeispiels anhand der Figur.

Diese zeigt eine skizzenhafte Darstellung einer Satellitenfernsehsignal-Empfangsanlage, in welcher Darstellung die zum Verständnis der Erfindung notwendigen Baugruppen gezeigt sind.

Die gezeigte Anlage enthält eine Kopfstation K, die einen ersten Eingangsanschluß 2 für von einer Satellitenantenne 1 abgeleitete Satellitenfernsehsignale und einen zweiten Eingangsanschluß 8 für von einer terrestrischen Empfangsantenne 7 abgeleitete terrestrisch übertragene Fernsehsignale aufweist.

Die der Kopfstation K über ihren ersten Eingang 2 zugeführten Signale werden einer ersten Baugruppe 3 zugeführt, die vier Aufbereitungszüge 31, 32, 33, 34 aufweist. Jeder dieser Aufbereitungszüge ist einem Satellitenempfangskanal zugeordnet und zur Demodulation und anschließenden Remodulation der in diesem Satellitenempfangskanal empfangenen Signale vorgesehen. Die Remodulation erfolgt dabei derart, daß die Ausgangssignale der Aufbereitungszüge jeweils in einem bestimmten VHF- oder UHF-Kanal liegen.

Die erste Baugruppe 3 ist in der Kopfstation K derart angeordnet, daß sie ohne großen Aufwand ausgetauscht werden kann..

Die der Kopfstation K über den ersten Eingang 2 zugeführten Signale werden weiterhin einer zweiten Baugruppe 4 zugeführt, die ebenfalls vier Aufbereitungszüge 41, 42, 43, 44 aufweist. Jeder dieser Aufbereitungszüge ist einem Satellitenempfangskanal zugeordnet und zur Demodulation und anschließenden Remodulation der in diesem Satellitenempfangskanal empfangenen Signale vorgesehen.

Die Remodulation erfolgt dabei derart, daß die Ausgangssignale der Aufbereitungszüge jeweils in einem bestimmten VHF- oder UHF-Kanal liegen.

Die Baugruppe 4 ist mittels einer Steckverbindung 5, 6 in die Kopfstation K eingesetzt. Folglich kann die gezeigte Kopfstation im Betrieb bei Vorliegen von geänderten Empfangssituationen durch einen einfachen und schnellen Austausch dieser Baugruppe 4 an diese neuen Empfangssituationen angepaßt werden. Besteht beispielsweise die neue Empfangssituation darin, daß mittels der gezeigten Anlage auch digitale Satellitenfernsehsignale empfangen werden können, dann kann eine bisher zur Verarbeitung von analogen Satellitenfernsehsignalen vorgesehene Baugruppe 4 durch eine neue Baugruppe 4 ersetzt werden, mittels der digitale Satellitenfernsehsignale empfangen und verarbeitet werden können. In gleicher Weise kann auch die Baugruppe 3 ausgetauscht werden.

Eine vorteilhafte Weiterbildung der Erfindung besteht darin, die Kopfstation K mit einem oder mehreren weiteren Steckplätzen 13, 14 auszurüsten, über welche eine oder mehrere weitere Baugruppen mit jeweils vier Aufbereitungszügen zur Erweiterung der Anlage eingesetzt werden können.

Die der Kopfstation K über den zweiten Eingang 8 zugeführten terrestrischen Empfangssignale werden einem terrestrischen Verstärker 9 zugeführt. Mittels dieses terrestrischen Verstärker 9, der ebenfalls fest in der Kopfstation verdrahtet ist, können beispielsweise 6-8 terrestrische Fernsehprogramme empfangen werden, die in vorgegebenen VHF- und/oder UHF-Kanälen übertragen werden.

Am Ausgang des terrestrischen Verstärkers 9 können diese terrestrischen Fernsehprogramme in unveränderter Form zur Verfügung gestellt werden, d. h. sie können durch den terrestrischen Verstärker 9 durchgeschleift werden.

In einer weiteren vorteilhaften Ausgestaltung der Erfindung ist der terrestrische Verstärker 9 als Empfänger für terrestrische Fernsehsignale mit Umsetzer ausgebildet. So können gegebenenfalls mittels des terrestrischen Empfängers mit Umsetzer die empfangenen Fernsehsignale in andere UHF- oder VHF-Kanäle umgesetzt werden.
Die vom terrestrischen Empfänger mit Umsetzer empfangenen Signale werden weiterhin über die Signalleitung a einem Mikrocomputer 12 der Kopfstation K zugeführt, der als gemeinsame Steuereinheit für den terrestrischen Empfänger mit Umsetzer und die Baugruppen 3 und 4 mit den Aufbereitungszügen 31-34 und 41-44 dient. Zur Steuerung dieser Bauteile sind dabei die bidirektionalen Signalleitungen a, b und c vorgesehen.

Der Mikrocomputer 12 erkennt anhand der ihm über die Signalleitung a zugeführten terrestrischen Fernsehsignale, in welchen VHF- und UHF-Kanälen Signale empfangen werden. Folglich ist er dazu in der Lage, die in den Aufbereitungszügen 31-34 und 41-44 erfolgenden Remodulationen derart zu steuern, daß die am Ausgang der Aufbereitungszüge und die am Ausgang des terrestrischen Empfängers mit Umsetzer zur Verfügung gestellten Signale jeweils in verschiedenen UHF- bzw. VHF-Kanälen liegen.

Weiterhin überprüft der Mikrocomputer 12, ob unter den insgesamt empfangenen Signalen Doubletten auftreten, d. h. ob beispielsweise das Programm ARD sowohl terrestrisch als auch in Form eines analogen Satellitenfernsehsignals angeliefert wird. Diese Überprüfung kann auch auf eine entsprechende Überprüfung digitaler Satellitenfernsehsignale erweitert sein. Um derartige Doubletten erkennen zu können, werden dem Mikrocomputer 12 über die Signalleitungen a, b und c die in den jeweiligen Kanälen empfangenen Signale zugeführt. Der Mikrocomputer wertet diese Signale im Hinblick auf darin enthaltene Senderkennungssignale und/oder übereinstimmende Bildinhalte aus. Treten Doubletten auf, dann erzeugt der Mikrocomputer 12 ein den Benutzer informierendes Kennsignal, aufgrund dessen sich der Benutzer für eines der Empfangssignale entscheidet und die unerwünschten Doubletten vom Empfang ausschließt. Alternativ dazu kann der Mikrocomputer auch automatisch aufgrund einer einprogrammierten Prioritätsvorgabe einem dieser Empfangssignale Priorität zuordnen und die Doublette vom Empfang unterdrücken. In einer weiteren Ausgestaltung der Erfindung führt der Mikrocomputer 12 eine Bewertung der Empfangsqualität erkannter Doubletten durch und übernimmt den Sender mit der besten Empfangsqualität. Letzteres bedeutet eine weitere Entlastung für den Zuschauer.

Nach alledem ist die erfindungsgemäße Anlage insbesondere zur Verwendung als Kopfstation in Hotels, Heimen, Wohnblocks und Mehrfamilienhäusern geeignet. Sie ist vor allem für eine Umrüstung bestehender Anlagen im Hinblick auf geänderte Empfangsverhältnisse konzipiert, beispielsweise für einen neu hinzugekommenen Empfang digitaler Satellitenfernsehsignale. Sie ist vorzugsweise in Einseitenbandtechnik ausgeführt, d. h. sie ist nachbarkanaltauglich.

Durch die beschriebene Kombination von fest eingebauten und einsteckbaren Komponenten wird ein günstiger Kompromiß zwischen Herstellungspreis und Modularität der Anlage bereitgestellt, wobei die genannte Modularität im Sinne einer oder mehrerer Baugruppen mit jeweils vier Aufbereitungszügen gegeben ist. Jede dieser Baugruppen kann in Abhängigkeit von den momentanen Empfangsverhältnissen zur Verarbeitung von analogen oder digitalen Satellitenfernsehsignalen vorgesehen sein.

Die Verwendung eines terrestrischen Empfängers in der Kopfstation begünstigt eine preisgünstige Realisierung der gesamten Anlage, da eine terrestrische Aufbereitung ohne teure Umsetzer auskommt.

Vorzugsweise erfolgt unter Steuerung durch den Mikrocomputer 12 auch eine selektive, programmierbare Verstärkung der empfangenen Signale, so daß die Ausgangssignale der Kopfstation jeweils mit dem notwendigen Ausgangspegel von ca. 105 db/µV am gemeinsamen Ausgangsanschluß 11 der Kopfstation zur Verfügung gestellt und von dort aus in das bestehende Hausantennenverteilnetz 10 eingespeist werden können.

Vorzugsweise kann weiterhin ein Verstärker für den Hörfunkbereich UKW-FM in Form eines Bandpasses mit einem Durchlaßbereich von 82,5 - 108 MHz in die Kopfstation integriert sein.

## Patentansprüche

1. Satellitenfernsehsignal-Empfangsanlage, die eine Kopfstation aufweist, welche mehrere Aufbereitungszüge zur Demodulation und Remodulation von von einer Satellitenantenne abgeleiteten Satellitenfernsehsignalen enthält, welche der Kopfstation über einen ersten Eingangsanschluß zugeführt werden,
**dadurch gekennzeichnet, daß**
die Kopfstation (K) weiterhin einen zweiten Eingangsanschluß (8) aufweist, welchem von einer und/oder mehreren terrestrischen Empfangsantennen (7) abgeleitete Fernsehsignale zuführbar sind, daß mit dem zweiten Eingangsanschluß (8) eine in die Kopfstation (K) integrierte Verstärkereinheit (9) für terrestrische Rundfunksignale verbunden ist und daß die Kopfstation (K) einen gemeinsamen Ausgangsanschluß (11) für die von den Aufbereitungszügen (3, 4) und die von der terrestrischen Empfangseinheit (9) abgeleiteten Ausgangssignale aufweist.

2. Satellitenfernsehsignal-Empfangsanlage nach Anspruch 1,
**dadurch gekennzeichnet, daß**
die Verstärkereinheit (9) eine Empfängereinheit mit Umsetzer ist.

3. Satellitenfernsehsignal-Empfangsanlage nach Anspruch 1 oder 2,
**dadurch gekennzeichnet, daß**
die Aufbereitungszüge (3, 4) zur Demodulation und Remodulation der von der Satellitenantenne (1) abgeleiteten Satellitenfernsehsignale in Baugruppen (3, 4) organisiert sind, wobei jede Baugruppe vier Aufbereitungszüge (31, 32, 33, 34 bzw. 41, 42, 43, 44) umfaßt.

4. Satellitenfernsehsignal-Empfangsanlage nach Anspruch 3,
**dadurch gekennzeichnet, daß**
eine erste Baugruppe (3) Aufbereitungszüge (31, 32, 33, 34) umfaßt, die zur Verarbeitung von analogen Satellitenfernsehsignalen vorgesehen sind.

5. Satellitenfernsehsignal-Empfangsanlage nach einem der Ansprüche 3-4,
**dadurch gekennzeichnet, daß**
eine zweite Baugruppe (4) Aufbereitungszüge (41, 42, 43, 44) umfaßt, die zur Verarbeitung von digitalen Satellitenfernsehsignalen vorgesehen sind.

6. Satellitenfernsehsignal-Empfangsanlage nach einem der Ansprüche 2-4,
**dadurch gekennzeichnet, daß**
eine zweite Baugruppe (4) Aufbereitungszüge umfaßt, die zur Verarbeitung von analogen Satellitenfernsehsignalen vorgesehen sind.

7. Satellitenfemsehsignal-Empfangsanlage nach Anspruch 5 oder 6,
**dadurch gekennzeichnet, daß**
die zweite Baugruppe mittels einer Steckverbindung (5, 6) in die Kopfstation (K) eingesetzt ist.

8. Satellitenfernsehsignal-Empfangsanlage nach einem der vorhergehenden Ansprüche,
**dadurch gekennzeichnet, daß**
sie einen Mikrocomputer (12) als gemeinsame Steuereinheit aufweist.

9. Satellitenfernsehsignal-Empfangsanlage nach Anspruch 8,
**dadurch gekennzeichnet, daß**
der Mikrocomputer (12) zur Überwachung der am gemeinsamen Ausgangsanschluß (11) der Kopfstation (K) zur Verfügung gestellten UHF- und VHF-Signale vorgesehen ist, um eine Umsetzung verschiedener Fernsehempfangssignale in denselben UHF- bzw. VHF-Kanal zu vermeiden.

10. Satellitenfernsehsignal-Empfangsanlage nach Anspruch 8 oder 9,
**dadurch gekennzeichnet, daß**
der Mikrocomputer (12) derart programmiert ist, daß er empfangenen Fernsehsignalen automatisch einen freien UHF- oder VHF-Kanal zuordnet.

11. Satellitenfernsehsignal-Empfangsanlage nach einem der Ansprüche 8 bis 10,
**dadurch gekennzeichnet, daß**
der Mikrocomputer (12) derart programmiert ist, daß er einen Mehrfachempfang ein und desselben Fernsehprogrammes detektiert und signalisiert oder verhindert.

12. Satellitenfernsehsignal-Empfangsanlage nach Anspruch 11,
**dadurch gekennzeichnet, daß**
ein Mehrfachempfang ein und desselben Fernsehprogrammes durch Auswertung von in den empfangenen Signalen enthaltenen Senderkennungen und/oder durch einen Bildinhaltsvergleich erfolgt.
